# EUROPEAN PATENT SPECIFICATION

(11) **EP 4 089 693 B1**
(45) Date of publication and mention of the grant of the patent: **13.12.2023**
(21) Application number: 22172844.7
(22) Date of filing: 11.05.2022
(51) Int. Cl.: H01B 7/295

(54) **FLAME-RETARDANT CABLE**
FLAMMHEMMENDES KABEL
CÂBLE IGNIFUGE

(30) Priority: 14.05.2021 IT 202100012449
(43) Date of publication of application: 16.11.2022
(73) Proprietor: Prysmian S.p.A., 20126 Milano (IT)
(72) Inventor: RODA, Elena, 26833 Merlino (LO) (IT); GALLETTI, Franco, 26833 Merlino (LO) (IT)
(74) Representative: Botti & Ferrari S.p.A.

(56) References cited:
- WO-A1-2020/086455
- US-A1- 2008 093 107
- DATABASE WPI Week 201957 Thomson Scientific, London, GB; AN 2019-451676 XP002805240, -& CN 109 735 021 A (CGNPC DELTA JIANGSU PLASTICIZING CO LTD) 10 May 2019 (2019-05-10)

## Description

### Field of application

The present disclosure relates to a flame-retardant cable, either electric or optical or opto-electric.

In particular, the present disclosure relates to a flame-retardant cable having a flame-retardant PVC-based outer jacket which exhibits reduced dripping (occurrence of droplets) when exposed to high temperatures, e.g. in case of fire.

The cable according to the disclosure can be used for low-voltage (LV) or telecommunication applications.

### Prior art

As known, an important requirement for cables, especially for building application, is an effective good behaviour in case of fire (as specified for example in the Commission Delegated Regulation (EU) 2016/364 of 1 July 2015), so as to avoid flame propagation and smoke generation in houses or, more generally, in premises where persons reside. The cable performance against fire can depend on the cable outer jacket which should have certain properties.

In this connection, it is known to produce the cable jacket from a polymeric composition having flame-retardant properties per se or imparted by the addition of a suitable flame-retardant filler.

Polyvinyl chloride (PVC) is a polymeric material widely used in cable construction. Pure PVC is rather rigid and to make it suitably flexible for cable plasticizers are added to it, the very commonly used being phthalates as from, for example, WO 2013/048775. Another example is WO 2020/086455 A1 which also discloses a flame retardant PVC mixture for wires or cables.

PVC is inherently resistant to flame. The Applicant noticed that the majority of plasticizers used to impart flexibility to the PVC polymer can compromise this important technical characteristic.

Therefore, when plasticizers are added to a PVC polymer in order to make it flexible, also suitable flame-retardant fillers should be added so that the resulting PVC polymer composition provides a cable coating with suitable flame-retardant properties.

A commonly used flame-retardant filler for PVC is antimony trioxide.

Some regulations, like the above-mentioned one, also require the cable to be not only flame retardant, but also having a low or null dripping in case of fire, i.e. it should not generate hot drops or bits, because these could further feed the fire.

Some standards, particularly international standards, are more and more stringent about the performances required to a flame-retardant cable to the end of improving the safety in buildings in case of fire.

The addition of flame-retardant fillers, such as magnesium hydroxide and/or aluminium hydroxide to a PVC-based polymeric material of the cable outer jacket enhances the effectiveness against flame progression, but has few impacts on limiting or preventing the dripping when the cable is exposed to high temperatures e.g., in case of fire.

CN 109735021 discloses a flame-retardant PVC cable material comprising the following components in parts by weight: 50-100 parts of PVC resin, 10~15 parts of aluminium hydroxide, 5~10 parts of antimony trioxide; 1~3 parts of inorganic silicate clay, 10~15 parts of calcium zinc heat stabilizer, 5~10 parts of a filler, such as calcium carbonate, 8~12 parts of zinc borate and 20~30 parts of a polyester elastomer.

CN107118457 discloses a PVC flame-retardant cable sheath material comprising the following components by weight: 90-100 parts of PVC resin, 5-10 parts of alumina, 4-5 parts of magnesium hydroxide, 3-5 parts of magnesium oxide and 2-3 parts of modified sepiolite. An auxiliary agent is also mentioned comprising, *inter alia*, 5-8 parts of calcium carbonate in 30-40 parts of natural rubber.

CN109467839 discloses a PVC automobile wire and cable material comprising the following components: 100 parts by weight of polyvinyl chloride (PVC), 3-5 parts by weight of the composite flame retardant, e.g. antimony trioxide, 5-25 parts by weight of the additive, e.g. kaolin and/or calcium carbonate, 5-11 parts by weight of a composite stabilizer, i.e. a calcium zinc epoxy compound, and 0.6-1.3 parts by weight of the auxiliary stabilizer (a mixture of β-diketone, amino crotonate and α-phenyl fluorene).

CN 105524368 discloses a polyvinyl chloride sheath material including the following components by weight: 100 parts of polyvinyl chloride resin, 10-25 parts of compound flame retardant including antimony trioxide, aluminum hydroxide and 3.5 water zinc borate, 10 parts of filler, e.g. calcium carbonate and/or kaolin, and 2-5 parts of compound stabilizer including, *inter alia*, calcium and zinc stearate.

### Summary of the disclosure

In view of the above, a main object of the present disclosure is providing a flame-retardant cable having the outermost layer (being the outer jacket or a skin covering the outer jacket) made of a composition with PVC as polymer base composition and having improved fire performances, like reduced or no dripping (occurrence of droplets) when exposed to flame, so as to meet the stricter requirements for certification according to the current international standards.

Another object of the present disclosure is providing a flame-retardant cable as above which, in addition to having improved performances under fire, has good mechanical properties and is easily workable, for example by extrusion processes.

The Applicant found that a cable, either electric or optical or opto-electric, having an outer jacket made of a PVC polymer composition has improved flame-retardant properties, like a reduced or null dripping under fire, when its outermost layer comprises a metal hydroxide, sepiolite and antimony trioxide as flame-retardant fillers in respective specific amount ranges.

Accordingly, the present disclosure relates to a flame-retardant cable, either electric or optical or opto-electric, having a transmissive core and an outermost layer made from a flame-retardant polymer composition comprising:
a) 100 phr of polyvinylchloride (PVC) as base polymer;
b) 65-90 phr of a metal hydroxide;
c) 2-9 phr of antimony trioxide;
d) 1-3 phr of an optionally surface-modified sepiolite, and
e) 3-10 phr of a Ca/Zn stabilizer.

In an embodiment, the polymer composition also comprises up to 20 phr of an alkali or alkaline-earth metal carbonate, such as calcium carbonate.

In an embodiment, the cable of the present disclosure is an electric cable with a transmissive core comprising an electric conductor and an electrically insulating layer.

In an embodiment, the cable of the present disclosure is an optical cable with a transmissive core comprising at least one optical fibre.

In an embodiment, the cable of the present disclosure is an opto-electric cable with a transmissive core comprising at least one optical fibre, an electric conductor and an electrically insulating layer.

In an embodiment, PVC is the sole base polymer of the polymer composition.

In an embodiment, the outermost layer is a jacket.

In another embodiment, the outermost layer is a skin layer covering the jacket. In an embodiment, the skin layer has a thickness of from 0.05 to 0.5 mm.

The Applicant found that a cable provided with the outermost layer made from a flame-retardant composition as specified above has improved reaction to fire performances, for example regarding a lower dripping or absence of dripping during burning.

In addition, the Applicant found that the provision of an outermost layer as specified above allows to impart suitable flame-retardant properties and improved resistance to dripping under fire to the cable without impairing its mechanical properties and workability of the polymer material forming the outermost layer, particularly in the extrusion step.

### Detailed description

For the purpose of the present description and of the appended claims, the words "a" or "an" should be read to include one or at least one and the singular also includes the plural unless it is obvious that it is meant otherwise. This is done merely for convenience and to give a general sense of the disclosure.

Within the present description and the subsequent claims, unless indicated otherwise, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated therein.

In the present description, it is to be understood that the technical features described above and below can be combined with each other in any way, constituting further embodiments of the present disclosure which may not be specifically described for conciseness, but which fall within the scope of the present disclosure.

In the present description and claims, the amount of the components of the flame-retardant polymer composition is given in phr (parts per hundred rubber), indicating the parts by weight per 100 parts by weight of the base polymeric material.

The cable according to the disclosure can be used particularly for low-voltage (LV) or telecommunication applications.

In the present description and the appended claims, as "low voltage cable" it is meant a voltage equal or less than about 1 kV.

When the cable according to the present disclosure is an electric or opto-electric cable, it can have one or more conductors.

In the present description and in the subsequent claims, as "conductor" is meant an element of elongate shape made of an electrically conductive metallic material, e.g. aluminium, copper, carbon nanotubes or composite thereof. The elongate shape element may be a solid rod or may be composed by a group of bundled or stranded wires.

Each conductor of the electrical cable of the invention is surrounded by an insulating layer, which can be in direct contact therewith. An outermost layer can surround one or more conductors.

When the cable according to the present disclosure is an optical or opto-electric cable, it can comprise one or more optical fibres.

Each optical fibre comprises an optical waveguide surrounded by at least one protective layer.

In accordance with the present disclosure, in the case a skin is the outermost layer of the cable, the jacket surrounded by the skin can be made from a composition according to the present disclosure or not. For example, the jacket underlying the skin layer can be made of a flame-retardant PVC-based polymer composition lacking sepiolite.

In an embodiment, the polyvinyl chloride has a K value of at least 65, more preferably a K value from 68 to 72. The K value, also referred to as intrinsic viscosity, indicates the mean molecular weight of PVC. The K value can be determined according to DIN EN ISO 1628-1 (1988). Mixture of PVCs with different K value can be employed as PVC polymer base according to the present disclosure.

The flame-retardant PVC-based polymer composition can also include at least one plasticizer, for example at least one phthalate plasticizer.

The phthalate plasticizer can be selected from the group consisting of di(2-ethylhexyl) phthalate (DEHP), diisononyl phthalate (DINP), diisodecyl phthalate (DIDP), diisotridecyl phthalate (DITP) and mixture thereof.

Other suitable plasticizers that can be used in addition to or replacement for phthalates are, e.g., chlorinated paraffins.

In an embodiment, the flame-retardant polymer composition comprises at least one chlorinated paraffin plasticizer and at least one phthalate plasticizer in a ratio of from 1:2.0 to 1:3.5.

The flame-retardant polymer composition of the present disclosure further comprises a metal hydroxide in amount of 65-90 phr, as flame-retardant filler.

In an embodiment, the metal hydroxide is selected from magnesium hydroxide, aluminium hydroxide or a combination thereof.

The metal hydroxide can be used in the form of particles which are untreated or surface-treated with saturated or unsaturated fatty acids containing from 8 to 24 carbon atoms, or metal salts thereof, such as, for example: oleic acid, palmitic acid, stearic acid, isostearic acid, lauric acid; magnesium or zinc stearate or oleate; and the like.

An example of metal hydroxide suitable for the present cable is magnesium hydroxide, for example of natural origin (brucite), optionally surface-treated.

The flame-retardant polymer composition of the present disclosure further comprises antimony trioxide in an amount of 2-9 phr, as additional flame-retardant filler. An amount of antimony trioxide lower than 2 phr brings no substantial effect in the flame-retardant polymer composition; while an amount of antimony trioxide greater than 9 phr does not add any improvement to the cable performance and would increase the production costs of the flame-retardant polymer composition and of the cable obtained therefrom.

In an embodiment, the amount of antimony trioxide can be of 5-8 phr.

The range of amounts indicated above for the at least one metal hydroxide and for antimony trioxide are suitable to impart adequate flame-retardant properties to the outer sheath of the cable without impairing its mechanical properties.

The flame-retardant polymer composition of the present disclosure further comprises an optionally surface-modified sepiolite.

Sepiolite is an hydrated magnesium silicate belonging to the phyllosilicate group which has a fibrous (or fibrillar) microscopic structure while other clays, such as montmorillonite, for example, have rather an aggregate structure on a microscopic scale and a layered structure at the nanoscale. The particular physio-chemical structure of sepiolite gives it specific properties such as very high porosity (e.g. 0.37nm×1.06nm) and surface area (about 200∼300 m²/g).

In an embodiment, the optionally surface-treated sepiolite has average size dimensions (D50) of the fibres of from 5 to 15 µm.

The sepiolite of the present disclosure may be naturally occurring and may be purified according to conventional purification processes before its use in the flame-retardant polymer composition of the present disclosure.

The sepiolite of the present disclosure can be surface-treated with specific organic compounds including ammonium salts and silanes to improve compatibility of sepiolite with the polymeric matrix.

Suitable ammonium salts include alkyl ammonium and polyol ammonium. In an embodiment, the ammonium coated sepiolite contains (is surface treated with) a dialkyl dehydrogenated C₁₆-C₁₈) ammonium, for example dimethyl, di(hydrogenated tallow) ammonium.

In an embodiment, the sepiolite of the present disclosure is optionally surface-treated with silicone.

The amount of the optionally surface-treated sepiolite in the flame-retardant polymer composition of the present disclosure is in the range of 1-3 phr. An amount of optionally surface-treated sepiolite lower than 1 phr brings no substantial effect in the flame-retardant polymer composition; while an amount of optionally surface-treated sepiolite greater than 3 phr does not provide any significant increased effect in the flame-retardant polymer composition and would increase the production costs of the flame-retardant polymer composition and of the cable obtained therefrom, besides possibly impairing the mechanical features thereof.

The flame-retardant polymer composition of the present disclosure further comprises a calcium zinc (Ca/Zn) stabilizer. The Ca/Zn stabilizer can prevent the chain reaction of decomposition of PVC and the resulting release of hydrogen chloride (HCl) when PVC is heated to soften it, for example during the extrusion of the flame-retardant polymer composition to form the outermost layer of the cable of the present disclosure.

In addition, the Ca/Zn stabilizer imparts to the PVC present in the polymer composition of the present disclosure enhanced resistance to daylight, weathering and heat ageing.

Suitable Ca/Zn stabilizers include, for example, Ca and Zn salts with C_{8-C18} carboxylic acids (Ca/Zn carboxylates), such as Ca/Zn stearates, calcium, zinc epoxy compounds and combinations thereof. Other Ca/Zn stabilizers as known by the skilled person in the art may also be used.

The amount of the Ca/Zn stabilizer in the flame-retardant polymer composition of the present disclosure is in the range of 3-10 phr. An amount of Ca/Zn stabilizer lower than 1 phr brings no substantial effect in the flame-retardant polymer composition; while an amount of Ca/Zn stabilizer greater than 10 phr does not provide any significant increased effect.

The flame-retardant polymer composition of the present disclosure may also include an alkali or alkaline-earth metal carbonate in an amount up to 20 phr, as further flame-retardant aid.

A suitable alkali or alkaline-earth metal carbonate (hereinafter also referred to as "carbonate") for the present composition can be selected from sodium carbonate, magnesium carbonate, calcium carbonate or mixture thereof, either synthetic or naturally occurring, like, for example, dolomite. In an embodiment, the flame-retardant polymer composition of the present disclosure comprises calcium carbonate.

In an embodiment, the amount of alkali or alkaline-earth metal carbonate, such as calcium carbonate, is in the range of 15-20 phr.

The addition of carbonate to the polymer composition of the present disclosure as flame-retardant aid, in an amount up to 20 phr, allows to reduce the amount of hydroxide(s) in the polymer composition required to have satisfactory flame-retardant properties, especially reduced dripping, without impairing mechanical properties of the resulting cable. Amounts of carbonate greater than 20 phr may dilute the flame-retardant effect of metal hydroxide and antimony trioxide and impair the mechanical properties of the resulting composition.

Applicant experienced that the presence of an optionally surface-treated sepiolite in the flame-retardant polymeric composition used for the manufacture of the outermost layer of the cable together with antimony trioxide and at least one metal hydroxide in the amount ranges indicated above, not only contributes to improve the flame-retardant properties of the polymeric composition forming such coating, but also increases significantly its resistance to dripping under fire conditions.

In particular, Applicant experienced that sepiolite promotes the formation of substantially compact and homogeneous cohesive carbon residues ("char") of such outermost layer when it is exposed to a flame, for example in the event of a fire, which results in a reduction of the dripping of the polymeric material forming such coating and in a significant increase of the fall time of incandescent fragments of the polymeric material, e.g. during the flame test.

Thus, when the flame-retardant composition of the present disclosure is used for the manufacture of the outermost layer of the cable (e.g. the jacket or a skin layer coating the jacket), optionally surface-treated sepiolite promotes, under fire, the formation of a surface crust made substantially of compact and homogenous char having reduced gas permeability, which protects the underlying part of the cable preventing its burning and dripping for a significantly more prolonged period of time.

The above benefits are achieved while maintaining good mechanical and workability characteristics of the flame-retardant polymer composition.

The flame-retardant polymer composition may further comprise conventional components such as antioxidants, processing aids, additional stabilizers (i.e. other than Ca/Zn stabilizers), pigments, lubricants, coupling agents, etc.

Conventional antioxidants which are suitable for this purpose are by way of example: polymerized trimethyldihydroquinoline, 4,4'-thiobis (3-methyl-6-tert-butyl) phenol, pentaerythritol tetrakis [3- (3,5-di-terz-butyl-4-hydroxyphenyl) propionate], 2,2'-thio-diethylene-bis- [3- (3,5-di-tert-butyl-4-hydroxy-phenyl) propionate] and the like or mixtures thereof.

Process aids usually added to the base polymer include, for example, stearic acid, paraffin wax, silicone rubbers and the like, and mixtures thereof.

The lubricants used are, for example, paraffin waxes of low molecular weight, stearic acid, stearammide, oleammide, erucamide.

A coupling agent may be used with the aim of further improving compatibility between the flame-retardant inorganic fillers such as magnesium hydroxide and polymer matrix. This coupling agent can be selected from those known in the art, for example: saturated silane compounds or silane compounds containing at least one ethylenic unsaturation; peroxides or mixtures thereof.

The electrical cable according to the present disclosure may be produced based on cable manufacturing techniques known to those skilled in the art. In particular, the outermost layer may be formed using conventional processes with a thickness chosen to comply requirements and needs and standards of the specific application for the cable.

For example, the flame-retardant polymer composition according to the present disclosure can be prepared by mixing PVC base polymer and plasticizer, then adding flame-retardant fillers (metal hydroxide(s) and antimony trioxide), optionally surface-treated sepiolite, Ca/Zn stabilizer(s) and optionally further additives in the respective amounts.

The flame-retardant polymer composition so obtained is to manufacture a coating with thermoplastic properties. Such flame-retardant polymer composition is used to produce at least the outermost layer of the cable by extrusion onto a cable core containing one or more conductors according to extrusion techniques that are known in the art.

The cable according to the disclosure can be used for the transport of electric energy or data (telecommunication application). In one embodiment, the cable according to the disclosure is used for the transport of low voltage electric currents (LV), i.e. electric currents having a voltage not exceeding 1kV.

The features and advantages of the present disclosure will be made apparent by the following detailed description of some exemplary embodiments thereof, provided merely by way of non-limiting examples, description that will be conducted also by referring to the attached drawings, wherein:
- FIG. 1 is a cross-sectional view of an electric cable according to the present disclosure; and
- FIG. 2 is a cross-sectional view of another electric cable according to the present disclosure.

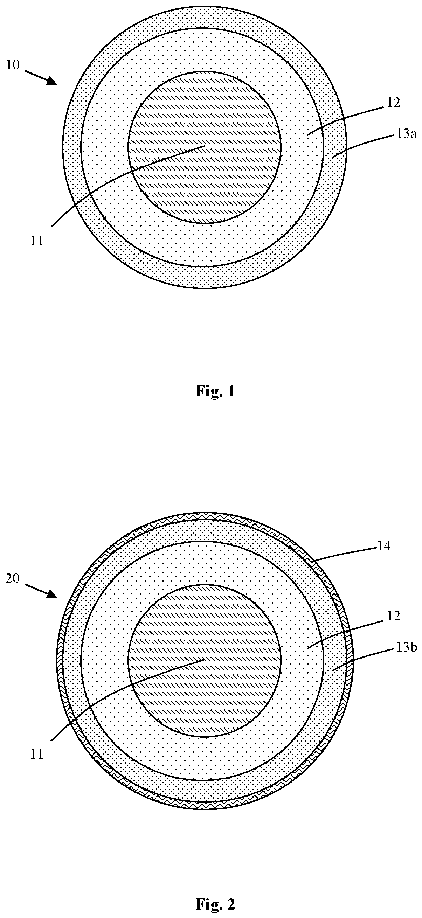

Figure 1 shows a cable 10 according to a non-limiting embodiment of the disclosure. Cable 10 has a core comprising a conductor 11 made of an electrically conductive material, e.g. aluminium, copper, carbon nanotubes or composite thereof. The conductor 11 may be in the form of a solid bar or a of bundle of wires, for example stranded.

The conductor 11 is electrically insulated by an insulating layer 12 in form of an extruded polymeric coating optionally having flame-retardant properties. For example, the insulating layer 12 can be made of an extruded polymeric material such as PVC, optionally filled with flame-retardant fillers, such as magnesium or aluminium hydroxide, or by a polyolefins LS0H material, as described, for example, in WO9905688.

In the embodiment shown in Figure 1, the insulating layer 12 is extruded in direct contact with the conductor 11.

Cable 10 comprises a jacket 13a as its outermost layer, made of a PVC polymeric material having flame-retardant properties according to the present disclosure. The jacket 13a surrounds the insulating layer 12 and, optionally, is in direct contact thereto. The jacket 13a is manufactured by extrusion. The jacket 13a has a thickness suitable for providing the cable with mechanical protection.

Figure 2 shows a cable 20 according to another non-limiting embodiment of the disclosure. In the cable 20, those features that are structurally and/or functionally equivalent to corresponding features of the cable 10 described above will be assigned the same reference numbers of the latter and will not be further described for conciseness.

The cable 20 differs from the cable 10 described above in that the outermost layer is a skin layer 14, made of a PVC polymeric material having flame-retardant properties according to the present disclosure. The skin layer 14 surrounds and directly contacts the jacket 13b. The skin layer 14 is manufactured by extrusion. The skin layer 14 has a thickness substantially smaller than that of the jacket 13b (of from 0.05 to 0.5 mm, for example of from 0.1 to 0.2 mm) and does not provide significant mechanical protection to the cable 20.

In this embodiment, the jacket 13b is made of a flame-retardant PVC polymer composition. A composition suitable for the jacket of the present cable is, for example, similar to that used for the outermost layer (the skin layer 14) but lacking any sepiolite. In another embodiment, also the jacket 13b is made of a composition according to the present disclosure.

The outermost layer of the cable of the disclosure, being either a jacket (as in the case of the cable 10 of Figure 1) or a skin layer (as in the case of the cable 20 of Figure 2) is made from a flame-retardant polymer composition described above.

The present disclosure will now be described with reference to the following examples.

### Example 1

### Preparation of test compositions according to the disclosure and comparative compositions.

Comparative flame-retardant polymer base compositions (hereinafter referred to as Samples from A to E and Sample I) and test compositions according to the disclosure (hereinafter referred to as samples from F to H) have been prepared by mixing, in a laboratory turbomixer, a PVC polymer, plasticizers, fillers and additives as indicated in the following Table 1.

The polymer compositions indicated above were used to produce samples of both comparative and test samples by conventional extrusion techniques.

Table 1 shows the amounts of PVC base polymer, plasticizers, fillers and other additives in the compositions used to produce both comparative sample and samples according to the disclosure, where the comparative samples are marked with an asterisk.

The amounts are provided as "phr".

**Table 1**

| Samples | PVC | Mg(OH)₂ | Plasticizers | Sb₂O₃ | Ca/Zn stabilizer | Sepiolite | CaCO₃ | Additives |
|---|---|---|---|---|---|---|---|---|
| A* | 100.0 | 90 | 55.0 | 7.6 | 7.3 | - | - | 0.9 |
| B* | 100.0 | 89.8 | 55.0 | 7.6 | 7.3 | 0.2 | - | 0.9 |
| C* | 100.0 | 89.6 | 55.0 | 7.6 | 7.3 | 0.4 | - | 0.9 |
| D* | 100.0 | 89.4 | 55.0 | 7.6 | 7.3 | 0.6 | - | 0.9 |
| E* | 100.0 | 89.2 | 55.0 | 7.6 | 7.3 | 0.8 | - | 0.9 |
| F | 100.0 | 88.8 | 55.0 | 7.6 | 7.3 | 1.2 | - | 0.9 |
| G | 100.0 | 87.0 | 55.0 | 7.6 | 7.3 | 3.0 | - | 0.9 |
| H | 100.0 | 69.6 | 55.0 | 7.6 | 7.3 | 3.0 | 17.4 | 0.9 |
| I* | 100.0 | 60.9 | 55.0 | 7.6 | 7.3 | 3.0 | 26.1 | 0.9 |

### Example 2

### Tests on dripping and char formation under fire conditions and mechanical properties

The samples obtained according to Example 1 were tested to determine their dripping behaviour under fire conditions and for mechanical properties.

The dripping tests were aimed at detecting the mean time of falling the first piece of the samples (drop fall mean time) and the formation of cohesive carbon residues (char) on them under fire conditions (anti-drop effect).

Specimens from plates having dimensions 100 ×150 mm and 3.0 thick were obtained from each sample and used for carrying out above evaluations.

Each specimen of a sample was clamped vertically from an upper end portion with a clamp fixed on a support while the lower end was free. The specimen was then burned under the action of a flame produced by a bunsen fed with air at a flow rate of 3.8 ml/min and with liquid propane gas (LPG) at a flow rate of 0.65 ml/min, maintaining the ratio between mass flow rates used.

The flame was oriented at about 90° with respect to the specimen and directed towards the lower edge of the specimen at the shorter side thereof.

The flame was held in this position for all the time of the test and the time from approaching the flame at the lower edge of the specimen until the first piece from the specimen falls off (drop fall time) was recorded.

With regard to the char formation, each specimen of a sample was clamped vertically from an upper end portion with a clamp fixed on a support while the lower end was free. The specimen was then burned as indicated above for 90 seconds and the specimen with its support were then immersed in cold water. Successively, the burned specimen was cut in the middle and the section of the cut burned specimen was observed to the microscope.

With regard to the mechanical properties, each specimen of a sample was evaluated for tensile strength (TS) and elongation at break (EB) according to IEC 60811-1-1 (1996).

The results are set forth in Table 2.

**Table 2**

| Sample | TS (MPa) | EB (%) | Drop fall mean time (seconds) |
|---|---|---|---|
| A* | 11.2 | 210 | 75 |
| B* | 10.7 | 213 | 67 |
| C* | 11.1 | 225 | 119 |
| D* | 12.0 | 222 | 119 |
| E* | 12.1 | 234 | 112 |
| F | 11.4 | 186 | >240 |
| G | 12.2 | 207 | >240 |
| H | 10.7 | 206 | >240 |
| I* | 10.7 | 217 | 101 |

From the above results it can be seen that all of the tested samples had acceptable mechanical properties.

As for the anti-dripping behaviour, Comparative Sample A, which is free of sepiolite, had a low drop fall mean time (dripping starts after about 1½ minute under fire).

The addition of sepiolite to the polymer composition in an amount of 0.2 phr together with a little decrease of the magnesium hydroxide concentration (Comparative Sample B) resulted in a decrease of the drop fall mean time. The addition of sepiolite to the polymer composition in an amount from 0.4 to 0.8 phr seemed to counteract the relevant decrease of the magnesium hydroxide concentration (Comparative Samples C, D and E) and resulted in an increase of the drop fall mean time, but the dripping still started anyway after less than 2 minutes under fire.

The addition of sepiolite to the polymer composition in an amount according to the present disclosure (Samples F and G), not only counteracted the relevant decrease of the magnesium hydroxide concentration, but also resulted in a substantial increase of the drop fall mean time, being greater than after 4 minutes under fire. The same result was achieved by further decreasing the amount of magnesium hydroxide and adding calcium carbonate to the polymer composition in a suitable amount according to the present disclosure (Sample H).

Conversely, the addition of calcium carbonate to the polymer composition in an amount above that provided by the present disclosure while maintaining unvaried the amount of sepiolite (Comparative Sample I) resulted in a substantial decrease of the drop fall mean time as dripping started after less than 2 minutes under fire.

Therefore, a cable outermost layer made of polymer compositions according to the present disclosure (Samples F to H) improves the cable fire performances to meet the more stringent national and/or international standards. At the same time, the mechanical properties such as tensile strength and elongation at break are maintained within the standard requirements.

The presence of sepiolite in the polymeric composition in amounts according to the present disclosure allows to obtain a more compact and uniform char on the burned samples obtained from such composition compared to the samples obtained from the polymeric compositions not including sepiolite or including sepiolite in amounts outside the respective ranges of amounts provided by the present disclosure. This can be appreciated by the long dripping time of the samples according to the present disclosure.

In addition, the presence of sepiolite imparts good flame performance also in terms of char forming and consequently in drop resistant effect to the polymeric composition even when the magnesium hydroxide amount decreases.

## Claims

1. A flame-retardant cable (10;20) having a transmissive core and an outermost layer (13a; 14) made from a flame-retardant polymer composition comprising:
a) 100 phr of polyvinylchloride (PVC) as base polymer;
b) 65-90 phr of a metal hydroxide;
c) 2-9 phr of antimony trioxide;
d) 1-3 phr of an optionally surface-modified sepiolite, and
e) 3-10 phr of a Ca/Zn stabilizer.

2. The flame-retardant electric cable (10;20) according to claim 1 which is an electric cable having a transmissive core comprising an electric conductor (11) and an electrically insulating coating (12).

3. The flame-retardant electric cable (10;20) according to claim 1 which is an optical cable with a transmissive core comprising at least one optical fibre.

4. The flame-retardant electric cable (10;20) according to claim 1 which is an opto-electric cable with a transmissive core comprising at least one optical fibre, an electric conductor and an electrically insulating layer.

5. The flame-retardant electric cable (10;20) according to claim 1, wherein the polymer composition further comprises up to 20 phr of an alkali or alkaline-earth metal carbonate.

6. The flame-retardant electric cable (10;20) according to claim 1, wherein the outermost layer (13a;14) is a jacket (13a).

7. The flame-retardant electric cable (10;20) according to claim 1, wherein the outermost layer (13a; 14) is a skin layer (14).

8. The flame-retardant electric cable (10;20) according to claim 7, wherein the skin layer (14) surrounds a jacket (13a) made of a composition according to claim 1.

9. The flame-retardant electric cable (10;20) according to claim 7, wherein the skin layer (14) surrounds a jacket (13a) made from a flame-retardant PVC-based polymer composition lacking sepiolite.

10. The flame-retardant electric cable (10;20) according to claim 1, wherein PVC is the sole base polymer of the polymer composition.

11. The flame-retardant electric cable (10;20) according to claim 1, wherein the metal hydroxide is selected from magnesium hydroxide, aluminium hydroxide or a combination thereof.

12. The flame-retardant electric cable (10;20) according to claim 1, wherein the amount of antimony trioxide is in the range of 5-8 phr.

13. The flame-retardant electric cable (10;20) according to claim 1, wherein the sepiolite is surface-treated with an ammonium salt, silane such as silicone or a combination thereof.

14. The flame-retardant electric cable (10;20) according to claim 5, wherein the amount of the alkali or alkaline-earth metal carbonate is in the range of 15-20 phr.

15. The flame-retardant electric cable (10;20) according to claim 1, wherein the polymer composition further comprises at least one chlorinated paraffin plasticizer and at least one phthalate plasticizer in a ratio of from 1:2.0 to 1:3.5.

## Patentansprüche

1. Flammhemmendes Kabel (10; 20) mit einem durchlässigen Kern und einer äußersten Schicht (13a; 14), die aus einer flammhemmenden Polymerzusammensetzung hergestellt ist, umfassend:
a) 100 phr Polyvinylchlorid (PVC) als Basispolymer;
b) 65-90 phr eines Metallhydroxids;
c) 2-9 phr Antimontrioxid;
d) 1-3 phr eines gegebenenfalls oberflächenmodifizierten Sepioliths und
e) 3-10 phr eines Ca/Zn-Stabilisators.

2. Flammhemmendes elektrisches Kabel (10; 20) nach Anspruch 1, das ein elektrisches Kabel mit einer durchlässigen Seele ist, die einen elektrischen Leiter (11) und eine elektrisch isolierende Beschichtung (12) umfasst.

3. Flammhemmendes elektrisches Kabel (10; 20) nach Anspruch 1, das ein optisches Kabel mit einem durchlässigen Kern ist, der mindestens eine optische Faser umfasst.

4. Flammhemmendes elektrisches Kabel (10; 20) nach Anspruch 1, das ein optoelektrisches Kabel mit einer durchlässigen Seele ist, die mindestens eine optische Faser, einen elektrischen Leiter und eine elektrisch isolierende Schicht umfasst.

5. Flammhemmendes elektrisches Kabel (10; 20) nach Anspruch 1, wobei die Polymerzusammensetzung weiterhin bis zu 20 phr eines Alkali- oder Erdalkalimetallcarbonats umfasst.

6. Flammhemmendes elektrisches Kabel (10; 20) nach Anspruch 1, wobei die äußerste Schicht (13a; 14) ein Mantel (13a) ist.

7. Flammhemmendes elektrisches Kabel (10; 20) nach Anspruch 1, wobei die äußerste Schicht (13a; 14) eine Außenschicht (14) ist.

8. Flammhemmendes elektrisches Kabel (10; 20) nach Anspruch 7, wobei die Außenschicht (14) einen Mantel (13a) umgibt, der aus einer Zusammensetzung nach Anspruch 1 besteht.

9. Flammhemmendes elektrisches Kabel (10; 20) nach Anspruch 7, wobei die Außenschicht (14) einen Mantel (13a) umgibt, der aus einer flammhemmenden Polymerzusammensetzung auf PVC-Basis besteht, der Sepiolith fehlt.

10. Flammhemmendes elektrisches Kabel (10; 20) nach Anspruch 1, wobei PVC das einzige Basispolymer der Polymerzusammensetzung ist.

11. Flammhemmendes elektrisches Kabel (10; 20) nach Anspruch 1, wobei das Metallhydroxid ausgewählt ist aus Magnesiumhydroxid, Aluminiumhydroxid oder einer Kombination davon.

12. Flammhemmendes elektrisches Kabel (10; 20) nach Anspruch 1, wobei die Menge an Antimontrioxid im Bereich von 5-8 phr liegt.

13. Flammhemmendes elektrisches Kabel (10; 20) nach Anspruch 1, wobei der Sepiolith mit einem Ammoniumsalz, Silan wie Silikon oder einer Kombination davon oberflächenbehandelt ist.

14. Flammhemmendes elektrisches Kabel (10; 20) nach Anspruch 5, wobei die Menge des Alkali- oder Erdalkalimetallcarbonats im Bereich von 15-20 phr liegt.

15. Flammhemmendes elektrisches Kabel (10; 20) nach Anspruch 1, wobei die Polymerzusammensetzung weiterhin mindestens einen chlorierten Paraffin-Weichmacher und mindestens einen Phthalat-Weichmacher in einem Verhältnis von 1:2,0 bis 1:3,5 umfasst.

## Revendications

1. Câble ignifuge (10 ; 20) ayant une âme transmissive et une couche la plus externe (13a ; 14) constituée d'une composition polymère ignifuge comprenant :
a) 100 pce de chlorure de polyvinyle (PVC) comme polymère de base ;
b) 65 à 90 pce d'un hydroxyde métallique ;
c) 2 à 9 pce de trioxyde d'antimoine ;
d) 1 à 3 pce d'une sépiolite facultativement modifiée en surface, et
e) 3 à 10 pce d'un stabilisant de Ca/Zn.

2. Câble électrique ignifuge (10 ; 20) selon la revendication 1 qui est un câble électrique ayant une âme transmissive comprenant un conducteur électrique (11) et un revêtement électriquement isolant (12).

3. Câble électrique ignifuge (10 ; 20) selon la revendication 1 qui est un câble optique ayant une âme transmissive comprenant au moins une fibre optique.

4. Câble électrique ignifuge (10 ; 20) selon la revendication 1 qui est un câble opto-électrique ayant une âme transmissive comprenant au moins une fibre optique, un conducteur électrique et une couche électriquement isolante.

5. Câble électrique ignifuge (10 ; 20) selon la revendication 1, dans lequel la composition polymère comprend en outre jusqu'à 20 pce d'un carbonate de métal alcalin ou alcalino-terreux.

6. Câble électrique ignifuge (10 ; 20) selon la revendication 1, dans lequel la couche la plus externe (13a ; 14) est une gaine (13a).

7. Câble électrique ignifuge (10 ; 20) selon la revendication 1, dans lequel la couche la plus externe (13a ; 14) est une couche de revêtement (14).

8. Câble électrique ignifuge (10 ; 20) selon la revendication 7, dans lequel la couche de revêtement (14) entoure une gaine (13a) constituée d'une composition selon la revendication 1.

9. Câble électrique ignifuge (10 ; 20) selon la revendication 7, dans lequel la couche de revêtement (14) entoure une gaine (13a) constituée d'une composition polymère ignifuge à base de PVC dépourvue de sépiolite.

10. Câble électrique ignifuge (10 ; 20) selon la revendication 1, dans lequel le PVC est le seul polymère de base de la composition polymère.

11. Câble électrique ignifuge (10 ; 20) selon la revendication 1, dans lequel l'hydroxyde métallique est choisi parmi de l'hydroxyde de magnésium, de l'hydroxyde d'aluminium ou une combinaison de ceux-ci.

12. Câble électrique ignifuge (10 ; 20) selon la revendication 1, dans lequel la quantité de trioxyde d'antimoine est dans la plage de 5 à 8 pce.

13. Câble électrique ignifuge (10 ; 20) selon la revendication 1, dans lequel la sépiolite est traitée en surface avec un sel d'ammonium, du silane tel que du silicone ou une combinaison de ceux-ci.

14. Câble électrique ignifuge (10 ; 20) selon la revendication 5, dans lequel la quantité du carbonate de métal alcalin ou alcalino-terreux est dans la plage de 15 à 20 pce.

15. Câble électrique ignifuge (10 ; 20) selon la revendication 1, dans lequel la composition polymère comprend en outre au moins un plastifiant de paraffine chlorée et au moins un plastifiant de phtalate selon un rapport de 1:2,0 à 1:3,5.
